# FASCICULE DE BREVET EUROPEEN

(11) **EP 2 270 899 B1**
(45) Date de publication et mention de la délivrance du brevet: **16.07.2014**
(21) Numéro de dépôt: 10164390.6
(22) Date de dépôt: 28.05.2010
(51) Int. Cl.: H01M 2/12, H01M 2/26, H01M 2/34

(54) **Conteneur pour accumulateur étanche**
Behälter für wasserdichten Akkumulator
Container for sealed accumulator

(30) Priorité: 15.06.2009 FR 0902910
(43) Date de publication de la demande: 05.01.2011
(73) Titulaire: Saft Groupe S.A., 93170 Bagnolet (FR)
(72) Inventeur: Rigobert, Gérard, 33370 FARGUES St HILAIRE (FR); Mermillod-Blondin, Luc, 74450 SAINT JEAN DE SIXT (FR)
(74) Mandataire: Hirsch & Associés

(56) Documents cités:
- US-A- 6 139 986

## Description

### DOMAINE TECHNIQUE

La présente invention se rapporte au domaine de conteneur pour accumulateurs étanches.

### ART ANTERIEUR

Un accumulateur électrochimique étanche ou générateur de courant étanche (ces deux termes étant équivalents, on utilisera le terme d'accumulateur dans la présente description) comprend de façon connue en soi un conteneur, contenant un faisceau électrochimique comportant une alternance d'électrodes positives et négatives encadrant des séparateurs imprégnés d'électrolyte. Chaque électrode est composée d'un collecteur de courant métallique supportant sur au moins une de ses faces la matière électrochimiquement active. L'électrode est connectée électriquement à une sortie de courant qui assure la continuité électrique entre l'électrode et l'application extérieure à laquelle l'accumulateur est associé. Le faisceau d'électrodes est disposé dans un conteneur fermé de manière étanche par un couvercle.

L'invention concerne les accumulateurs étanches par exemple de type, lithium primaire et lithium-ion. Ces accumulateurs peuvent être de format cylindrique ou de format rectangulaire (connu également sous le terme de prismatique).

Un accumulateur est généralement conçu pour fonctionner dans des conditions dites nominales, c'est-à-dire dans des gammes de température, courant et tension données. L'utilisation d'un accumulateur étanche hors des conditions nominales, comme par exemple une surcharge accidentelle, un court-circuit, une température supérieure à la température maximale de fonctionnement, etc., crée un risque d'explosion. En effet, de telles situations entraînent des réactions de l'électrochimie et génèrent des gaz. L'accumulation de ces gaz dans le conteneur entraîne une augmentation de la pression interne de l'accumulateur, qui peut conduire à un éclatement violent du conteneur et à la projection de composés chimiques nocifs et corrosifs pour l'environnement et les personnes situées à proximité.

Des dispositifs de sécurité existent, qui évitent l'accumulation des gaz à l'intérieur du conteneur d'un accumulateur étanche et permettent leur évacuation lorsque la pression interne excède une valeur prédéterminée.

Par ailleurs, il est nécessaire qu'un dispositif de sécurité pour accumulateur possède également la fonction de coupe-circuit, apte à isoler électriquement et de façon irréversible, les appareils connectés à l'accumulateur.

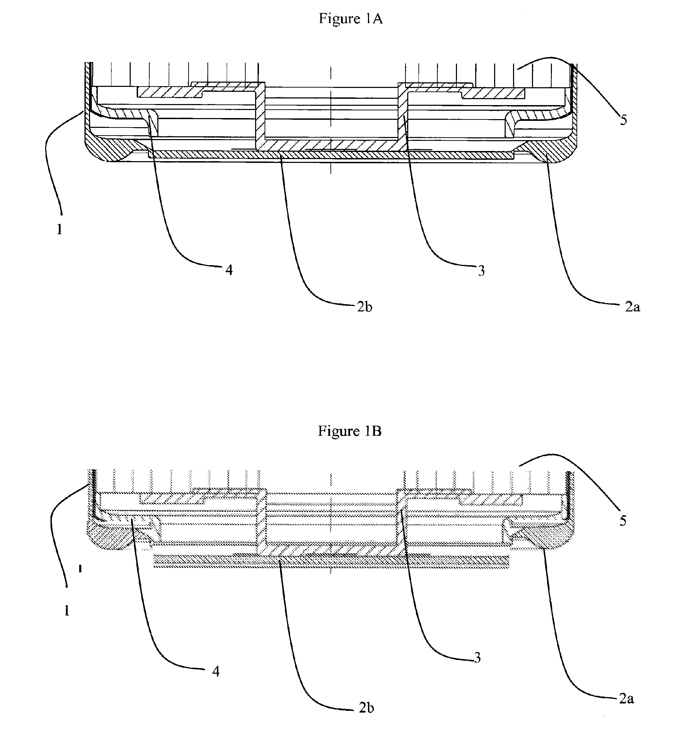

Il est connu du document FR-A-2 873 495 un accumulateur étanche. Cet accumulateur comprend une alternance d'électrodes positives et négatives respectivement reliées à des bornes de sortie de courant. Les électrodes sont disposées dans un conteneur présentant une paroi cylindrique obturée par un fond. Le fond est formé en trois parties, une partie périphérique reliée à la paroi cylindrique, un opercule et un amincissement reliant l'opercule à la partie périphérique. L'amincissement est adapté à être déchiré par une surpression à l'intérieur du conteneur. Une connexion plane raccorde l'électrode positive du faisceau à la paroi du fond du conteneur, les parois du conteneur étant électriquement conductrices avec le couvercle. Un joint en forme d'anneau est placé entre le faisceau électrochimique et le fond du conteneur. Il sert d'isolant électrique afin d'empêcher une reprise du contact électrique entre la tranche d'une électrode négative du faisceau et la paroi du conteneur reliée à la borne positive, ce qui pourrait occasionner un court-circuit après que le dispositif de sécurité ait été activé. Une déchirure de l'amincissement est adaptée à interrompre la conduction électrique entre les électrodes d'une polarité et sa borne de sortie de courant en déconnectant l'opercule de la partie périphérique. Le faisceau est en appui sur la pièce de connexion. Lors d'une surpression, la partie amincie se déchire et le faisceau en appui sur l'opercule par le biais de la connexion se déplace vers le fond du conteneur déchirant la totalité de la partie amincie afin d'assurer la coupure électrique entre l'électrode positive du faisceau électrochimique et le couvercle du conteneur. Une vue en coupe longitudinale de la partie basse d'un conteneur semblable et une vue en coupe lorsque l'opercule est déconnecté, sont représentées respectivement figures 1A et 1B.

Un tel conteneur présente cependant l'inconvénient d'être vulnérable aux chocs. En effet, le faisceau qui est la partie la plus lourde de l'élément est posé sur l'opercule. Suite à des chocs, le poids du faisceau exerce une force qui peut déchirer l'amincissement et donc déconnecter l'opercule de la partie périphérique de manière imprévue. On a constaté que l'opercule conçu initialement pour s'ouvrir pour une pression interne de l'accumulateur supérieure ou égale à 8 bars à 12 bars (en fonction de la capacité de l'accumulateur), s'ouvre en réalité pour une pression interne plus basse (entre 0 et 6 bars) quand elle ne se produit pas lors des chocs. Ceci s'explique par la fragilisation de l'amincissement provoquée par les chocs. Etant donné qu'un accumulateur peut avoir une pression interne de 6 bars en fin de vie, l'opercule peut s'ouvrir de façon inopinée.

Il existe donc un besoin pour un conteneur comprenant un opercule permettant d'interrompre la connexion électrique lors d'une surpression qui est moins vulnérable aux chocs.

A cette fin, la présente invention propose un conteneur d'accumulateur étanche destiné à contenir un faisceau électrochimique, le conteneur comprenant :
une paroi formant un fond en matière conductrice électriquement, comprenant :
   - une partie périphérique,
   - un opercule,
   - une partie fragilisée délimitant l'opercule, joignant la partie périphérique à l'opercule, adaptée à se rompre lors d'une surpression à l'intérieur du conteneur,
une bague isolante électriquement, montée sur la partie périphérique destinée à servir d'appui au faisceau électrochimique,
**caractérisé en ce que**, le conteneur comprend
une pièce de connexion souple conductrice électriquement, reliée électriquement avec l'opercule et destinée à être raccordée électriquement au faisceau électrochimique,
dans lequel lors de la surpression entraînant la rupture de ladite partie fragilisée, la pièce de connexion guide l'opercule vers une position après rupture sensiblement parallèle à la position avant rupture.

Suivant des modes de réalisation, le conteneur peut comprendre une ou plusieurs caractéristiques suivantes :
- la pièce de connexion souple comprend une partie de connexion destinée à être raccordée électriquement au faisceau, une partie centrale en contact avec à l'opercule,
- la pièce de connexion souple comprend un groupe de lamelles flexibles, spiralées, identiques, réparties régulièrement et reliant la partie centrale à la partie de connexion,
- les lamelles forment sensiblement une croix en forme de svastika,
- l'opercule est fixé à la partie centrale et dans lequel lors du déplacement de l'opercule de la position avant rupture à la position après rupture, l'opercule et la partie centrale effectuent un mouvement hélicoïdal vers l'extérieur du conteneur,
- la partie de connexion et la partie centrale ont une forme circulaire,
- la partie de connexion et la partie centrale se situent dans deux plans sensiblement parallèles et décalées,
- la pièce de connexion souple est montée sur la bague isolante, la bague isolant électriquement la pièce de connexion souple de la partie périphérique après rupture,
- la partie fragilisée est une partie de plus faible épaisseur que celle de l'opercule et de la partie périphérique,
- la pièce de connexion est en aluminium,

L'invention propose aussi un accumulateur étanche comprenant :
- le conteneur précédemment décrit,
- un faisceau électrochimique dans le conteneur en appui sur la bague isolante, dans lequel la rupture est adaptée à interrompre la conduction électrique passant par l'opercule entre le faisceau et la borne de sortie de courant de correspondante.

D'autres caractéristiques et avantages de l'invention apparaîtront à la lecture de la description qui suit, donnée à titre d'exemple et en référence aux figures qui montrent :
- Figure 1A une vue en coupe longitudinale du fond d'un conteneur selon l'art antérieur,
- figure 1B une vue en coupe longitudinale du fond de ce conteneur dont l'opercule est déconnecté de la partie périphérique,
- figure 2A une vue en coupe longitudinale du fond d'un conteneur selon l'invention,
- figure 2B une vue en coupe longitudinale du conteneur selon l'invention dont l'opercule est détaché,
- figure 3A une vue de dessus de la pièce de connexion selon un premier mode de réalisation,
- figure 3B une vue en élévation de la pièce de la figure 3A,
- figure 4, une vue de dessus de la pièce de connexion selon un deuxième mode de réalisation, et
- figure 5, une vue de dessus de la pièce de connexion selon un troisième mode de réalisation ;
- figures 6A et 6B, des vues en perspective des figures 2A et 2B respectivement d'un conteneur comprenant une pièce de connexion selon les figures 3.

Le conteneur selon l'invention va maintenant être décrit. Ce conteneur comprend une paroi latérale et une paroi formant un fond en matière conductrice. La paroi formant un fond comprend une partie périphérique reliée électriquement à la paroi latérale, un opercule et une partie fragilisée autour de l'opercule joignant l'opercule à la partie périphérique. Lors d'une surpression à l'intérieur du conteneur, la partie fragilisée est conçue pour se rompre afin de laisser échapper le gaz en surpression dans le conteneur. Le conteneur contient une bague isolante électriquement, montée sur la partie périphérique. Cette bague est destinée à supporter un faisceau électrochimique. Il sert d'isolant électrique afin d'empêcher un contact électrique entre la tranche d'une électrode du faisceau et la paroi du conteneur reliée à une électrode de polarité inverse, ce qui pourrait occasionner un court-circuit interne après que le dispositif de sécurité ait été activé. Le conteneur comprend une pièce de connexion souple conductrice électriquement, en contact électrique avec l'opercule. Par pièce souple, on entend une pièce se déformant lorsque la surpression pousse l'opercule vers l'extérieur, la pièce étant fixée à l'opercule. Lors de la surpression entraînant la rupture de ladite partie fragilisée, la pièce de connexion guide l'opercule vers une position après rupture sensiblement parallèle à la position avant rupture.

Le faisceau électrochimique est en appui sur la bague isolante et la pièce de connexion reliant électriquement le faisceau à l'opercule est souple. Le faisceau électrochimique n'est donc pas en appui sur l'opercule, mais seulement sur la partie périphérique par le biais de la bague isolante. En conséquence, suite à des chocs, le poids du faisceau n'exerce pas de force sur l'opercule et donc n'entraîne pas une rupture de la partie fragilisée. La surpression crée une force de poussée sur l'opercule dirigée vers l'extérieur du conteneur. La force de poussée entraîne la rupture de la partie fragilisée. Grâce au guidage de l'opercule vers une position parallèle à sa position avant rupture, la rupture de la partie fragilisée autour de l'opercule s'effectue totalement. En conséquence, l'opercule est assurément déconnecté de la partie périphérique. Le conteneur permet donc d'assurer la déconnexion électrique d'une électrode à sa borne associée tout en résistant aux chocs du faisceau électrochimique dans le conteneur.

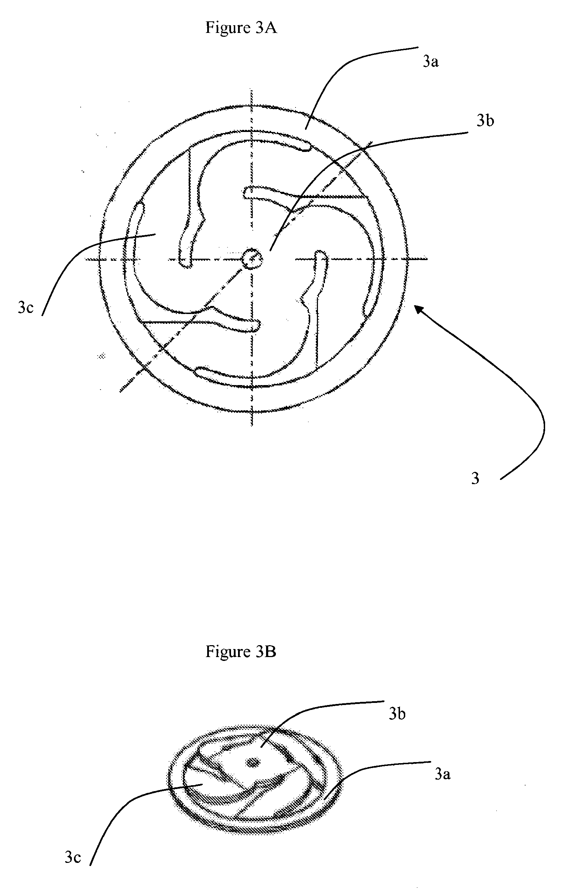

Les figures 3A et 3B représentent une pièce de connexion souple selon un premier mode de réalisation. La souplesse de la pièce de connexion est assurée à la fois par le type de matériau choisi (matériau à faible résistance mécanique comme par exemple de l'aluminium 1050) et par la géométrie de la pièce qui autorise un dépliage de la pièce de connexion tel que cela va être décrit plus en détails dans la suite de la description.

Sur la figure 3A, la pièce de connexion est représentée vue de dessus et sur la figure 3B, la pièce de connexion est représentée en élévation. La pièce de connexion est formée par une partie de connexion (3a) destinée à être reliée électriquement au faisceau, une partie centrale (3b) destinée à être fixée à l'opercule et des lamelles (3c) flexibles, identiques reliant la partie centrale à la partie de connexion. Les lamelles sont spiralées, c'est-à-dire qu'elles ont une forme courbée, comme une spirale, qui s'éloigne progressivement de la partie centrale (3b). Les lamelles sont réparties régulièrement autour de la partie centrale (3b). Les lamelles peuvent être spiralées en tournant vers la droite ou vers la gauche. Sur les figures 3A et 3B les lamelles tournent vers la droite. Sur les figures 3A et 3B, les lamelles (3a) sont au nombre de 4 formant sensiblement la croix en forme de svastika. Le nombre d'ailettes peut être supérieur à 4 ou au nombre de 3. Le fait d'avoir des ailettes (3a) de cette forme permet de rendre mobile la partie centrale (3b) par rapport à la partie de connexion (3a) en déplaçant la partie centrale (3b) selon un mouvement hélicoïdal dont l'axe passe par le centre de la partie centrale (3b). Ce mouvement de la partie centrale (3b) est dû au fait que les ailettes (3c) sont spiralées et qu'elles fléchissent. Ainsi, lors du mouvement hélicoïdal, les ailettes se déforment en fléchissant, se déployant (c'est à dire deviennent de moins en moins courbées). L'effort de fléchissement peut être réduit en réduisant l'épaisseur de l'ailette. La pièce de connexion peut comporter plusieurs ailettes qui peuvent être superposées en ayant une plus faible épaisseur pour que l'effort de fléchissement soit réduit tout en gardant la même résistivité de la pièce de connexion.

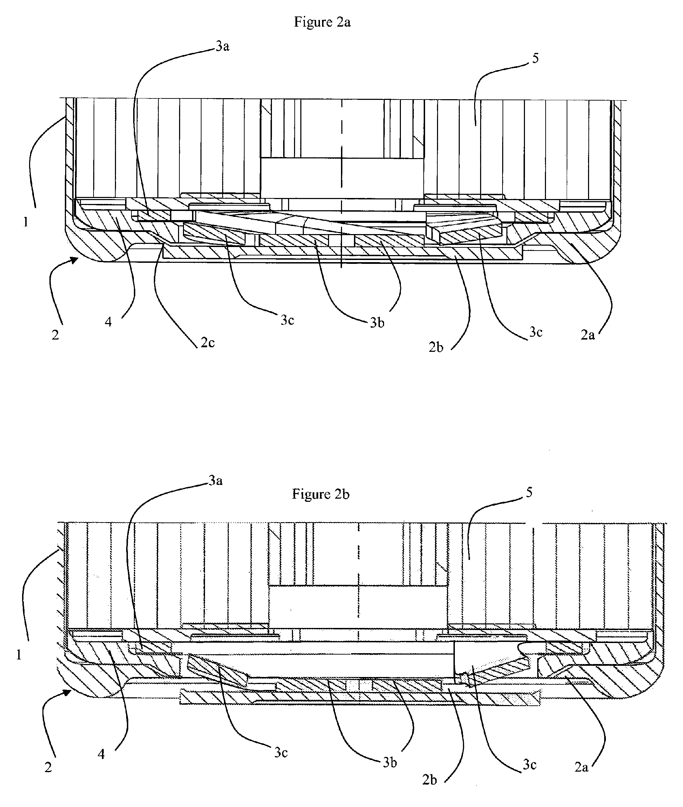

Dans l'exemple des figures 2A et 2B, le conteneur est de format sensiblement cylindrique et seule l'extrémité formant le fond du conteneur a été représentée. Le fond du conteneur comprend une partie périphérique (2a), un opercule (2b) et une partie fragilisée (2c) autour de l'opercule (2b), joignant la partie périphérique (2a) à l'opercule (2b). La partie fragilisée (2c) sur la figure 2A, est une partie amincie. On entend par zone amincie, une zone de la paroi du conteneur dont l'épaisseur est inférieure à l'épaisseur de la partie centrale (3b) et de l'opercule. La partie périphérique (2a) est reliée électriquement à la paroi latérale (1). La paroi latérale (1) et les parties formant le fond sont en matière conductrice électriquement. Le conteneur comprend aussi une bague isolante électriquement (4), montée sur la partie périphérique (2a). La bague (4) isolante peut par exemple être un joint. Le conteneur contient un faisceau électrochimique (5) monté sur la bague isolante (4).

Le faisceau comportant une alternance d'électrodes positives et négatives encadrant des séparateurs imprégnés d'électrolyte, et dans lequel les électrodes positives ou négatives sont reliées électriquement à une pièce de connexion (3) souple en matière conductrice électriquement. La pièce de connexion peut être par exemple en aluminium, car c'est une matière ayant une faible résistivité et ayant peu de résistance mécanique. Par exemple la pièce de connexion peut être en aluminium 1050. Dans la suite de la description, ce sont les électrodes positives qui sont reliées électriquement à la pièce de connexion (3). La pièce de connexion (3) fait partie du conteneur.

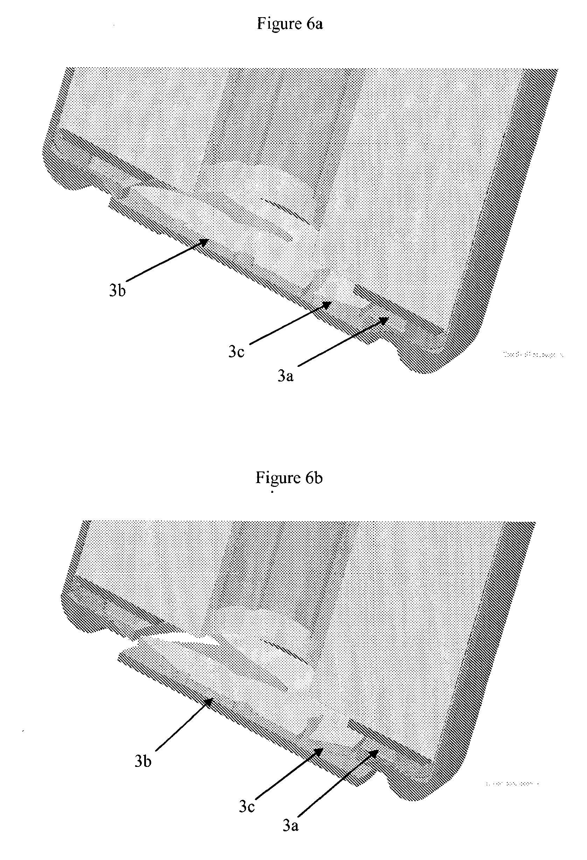

La pièce de connexion (3) comporte sur son pourtour une partie de connexion (3a) en forme d'anneau ayant une surface plane. Cette partie peut aussi avoir une forme de disque plein. La pièce de connexion (3) comporte une partie centrale (3b) ayant une surface plane parallèle à la surface de la partie de connexion (3a). Cette partie centrale (3b) est située dans un plan parallèle à la surface plane de la partie de connexion (3a). La partie de connexion (3a) et la partie centrale (3b) sont circulaires et ont le même axe. Cependant ces parties peuvent avoir d'autres formes, tel que carrée, rectangulaire etc... La pièce de connexion (3) comporte aussi des lamelles flexibles identiques (3c) reliant la partie centrale (3b) à la partie de connexion (3a). Les lamelles (3c) sont régulièrement réparties autour de la partie centrale (3b). Chaque lamelle (3c) est spiralée par rapport à la partie centrale (3b). Les quatre lamelles avec la partie centrale forment sensiblement une croix basque ou encore une croix de svastika dont les branches sont les lamelles. La pièce de connexion comporte une symétrie centrale qui est le centre de la partie centrale et de la partie de connexion. La partie centrale (3b) est fixée avec l'opercule (2b) et les électrodes positives du faisceau (5) sont reliées électriquement à cette pièce de connexion (3) par le biais de la partie de connexion (3a). Sur les figures 2A et 2B, la partie de connexion (3a) est montée sur un épaulement de la bague d'isolement (4), de tel façon que la bague isole électriquement la partie de connexion (3a) de la partie périphérique (2a) après déchirement de la partie fragilisée (2c). La bague (4) est donc montée entre la pièce de connexion (3) et la partie périphérique (2a). Bien entendu, la pièce de connexion (3) n'est pas obligatoirement montée sur la bague (4), par exemple elle peut être fixée directement au faisceau (5). Ainsi, la liaison électrique entre les électrodes positives et l'opercule (2b) est réalisée par le biais de la pièce de connexion (3). Les ailettes (3c) permettent de rendre souple la pièce de connexion (3). En effet, les ailettes (3c) permettent de rendre mobile la partie centrale (3b) de la partie de connexion (3a) en se fléchissant. Le déplacement de la partie centrale (3b) par rapport à la partie de connexion est un mouvement hélicoïdal dont l'axe passe par son centre. La rotation de la partie centrale sur elle-même est très faible par rapport à la translation rectiligne par exemple de 0.09°/1mm soit pour une course finale 0.54°/6.3 mm. Le mouvement hélicoïdal de la partie centrale (3b) est dû au fait que les ailettes (3c) fléchissent naturellement avant de s'étirer. Ainsi, la surface plane de la partie centrale (3b) est toujours parallèle à la surface plane de la partie de connexion (3a) comme illustré sur les figures 6A et 6B. La pièce de connexion (3) peut être une pièce monobloc fabriquée par découpe suivie d'une étape d'emboutissage. L'emboutissage permet d'étirer les ailettes (3c) afin que la partie centrale (3b) soit décalée dans un plan parallèle à la partie de connexion (3b) pour le montage de la pièce de connexion dans le conteneur.

La pièce de connexion (3) est très souple et donc ne pousse pas l'opercule. Cependant la pièce de connexion peut être légèrement comprimée entre le faisceau et l'opercule de façon à ce qu'elle applique une force de 40 à 100 Newton sur l'opercule. Cette force étant connue, la partie fragilisée peut être formée de façon à ce qu'une rupture de cette partie se déclenche dés qu'une pression qui lui est exercée est égale, à la force de compression de la pièce de connexion sur l'opercule, plus la pression de la surpression pour lequel l'opercule doit s'ouvrir pour éviter un risque d'éclatement violent du conteneur et de projection de composés chimiques nocifs et corrosifs pour l'environnement et les personnes situées à proximité du conteneur. Cette pression de surpression peut être supérieure ou égale à 5 bars.

Selon un autre mode de réalisation, la pièce de connexion est fixée d'une part à l'opercule et d'autre part au faisceau (5) ou à la bague (4) et est montée en traction dans le conteneur. Cette force étant aussi connue, la partie fragilisée peut être formée de façon à ce qu'une rupture de cette partie se déclenche dés qu'une pression qui lui est exercée est égale, à la force de traction de la pièce de connexion sur l'opercule, moins la pression de la surpression.

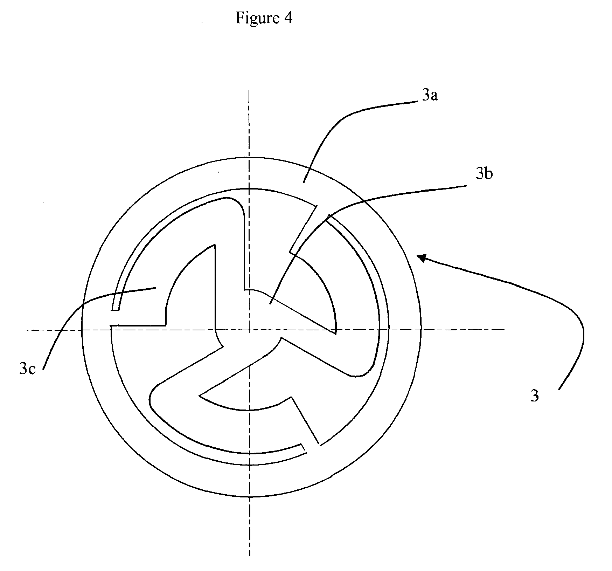

La figure 4 représente un deuxième mode de réalisation de la pièce de connexion (3) vue de dessus. Par vue de dessus, on entend une vue dont la partie de la pièce de connexion au premier plan est la partie de connexion (3a). Ce deuxième mode réalisation est basé sur celui du premier mode de réalisation décrit en relation avec les figures 3A et 3B. De ce fait la description faite pour le premier mode de réalisation est applicable aussi à ce deuxième mode de réalisation sauf pour les différences qui sont exposées ci-après. Notamment, la souplesse de la pièce de connexion est également assurée à la fois par le type de matériau choisi et par la géométrie de la pièce qui autorise un dépliage de la pièce de connexion lorsque l'opercule est repoussé par les gaz causant une surpression à l'intérieur du conteneur.

A la différence du premier mode de réalisation, la pièce de connexion (3) comporte seulement 3 ailettes. Les ailettes ont la même forme que les branches de la croix en forme de svastiska sauf en ce que les ailettes sont tournées vers la gauche alors que les branches de la croix en forme de svastika vers la droite. Les trois ailettes spiralées déplacent donc la partie centrale (3b) selon un mouvement hélicoïdal vers la gauche. La pièce de connexion (3) a donc une forme qui forme sensiblement une croix en forme de svastika à trois branches tournées vers la gauche.

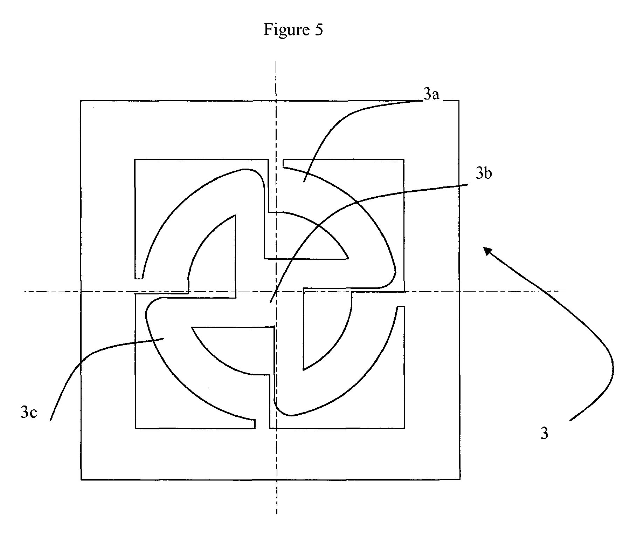

La figure 5 représente un troisième mode de réalisation de la pièce de connexion (3) vue de dessus. Ce troisième mode de réalisation est basé sur celui du premier mode de réalisation décrit en relation avec les figures 3A et 3B. De ce fait la description faite pour le premier mode de réalisation est applicable aussi à ce troisième mode de réalisation sauf pour les différences qui sont exposées ci-après. Notamment, la souplesse de la pièce de connexion est également assurée à la fois par le type de matériau choisi et par la géométrie de la pièce qui autorise un dépliage de la pièce de connexion lorsque l'opercule est déplacé après déchirement de la partie fragilisée par les gaz causant une surpression à l'intérieur du conteneur.

A la différence du premier mode de réalisation, la partie de connexion (3a) et la partie centrale (3b) ont une forme carrée. Les ailettes ont la même forme que les branches de la croix de en forme de svastiska sauf en ce que les ailettes sont tournées vers la gauche alors que les branches de la croix en forme de svastika vers la droite. Les quatre ailettes spiralées déplacent donc la partie centrale (3b) selon un mouvement hélicoïdal vers la gauche. Les ailettes (3c) et la partie centrale (3b) forment sensiblement une croix en forme de svastika. La partie de connexion (3a) forme un cadre encadrant la croix en forme de svastika.

Le principe de fonctionnement d'un accumulateur comprenant un tel conteneur va être maintenant décrit ci-dessous. L'accumulateur comprend le conteneur décrit ci-dessus, un faisceau électrochimique (5) dans le conteneur monté sur la bague isolante (4), le faisceau (5) comportant une alternance d'électrodes négatives et positives encadrant des séparateurs imprégnés d'électrolyte, et dans lequel les électrodes positives sont reliées électriquement à la pièce de connexion (3). Le conteneur comprend en outre un couvercle muni de deux bornes de sortie de courant. Une des bornes est une borne de sortie de courant négative reliée à au moins une électrode négative dans le conteneur, et l'autre borne est une borne de sortie de courant positive reliée à au moins une électrode positive dans le conteneur par le biais de la paroi latérale (1), la paroi formant le fond (2) et la pièce de connexion (3). La connexion des électrodes peut bien entendu être inversée, c'est-à-dire que les électrodes négatives peuvent être reliées à l'une des bornes du couvercle par le biais de la pièce de connexion (3) et les parois du conteneur et les électrodes positives à l'autre borne du couvercle. Cependant, dans ce cas, la pièce de connexion doit être dans une autre matière que l'aluminium tel que cuivre, nickel ou inox. Cependant, ces matières n'ont pas les mêmes caractéristiques mécaniques notamment celle de la souplesse.

Lors d'une surpression, par exemple due à une surcharge accidentelle, ou à un court-circuit ou à une température supérieure à la température maximale de fonctionnement, les parois du conteneur s'étirent par les forces exercées par la surpression. Cet étirement entraîne la rupture de la partie fragilisée (2c) en se déchirant entre l'opercule (2b) et la partie périphérique (2a). L'opercule (2b) se déplace donc vers l'extérieur du conteneur, la partie centrale (3b) fixée à l'opercule (2b) se déplace donc aussi vers l'extérieur du conteneur. La figure 2B représente l'opercule après rupture de la partie fragilisée (2c). Sur cette figure 2B, seule les deux ailettes coupées sont représentées. La partie de connexion (3a) en appui sur la bague isolante (4) reste immobile. Comme discuté plus haut, la partie centrale se déplace selon un mouvement hélicoïdal. Le mouvement hélicoïdal est imposé aussi à l'opercule du fait qu'elles sont fixées l'une à l'autre. La pièce de connexion guide donc le déplacement de l'opercule. Le déplacement hélicoïdal de l'opercule (2b) a pour effet de déchirer la totalité de la partie fragilisée autour de l'opercule (2b). Le guidage du déplacement de l'opercule (2b) permet qu'il se détache complètement de la partie périphérique (2a) et donc de rompre la connexion électrique entre ceux-ci. Sans guidage du déplacement de l'opercule (2b), la partie fragilisée (2c) peut ne pas se déchirer totalement. En effet, l'opercule (2b) peut pivoter autour de la partie non déchirée, et donc rester en contact électrique avec la partie périphérique (2a). Suite au mouvement hélicoïdal, l'opercule (2b) se retrouve donc dans une position sensiblement parallèle à sa position avant rupture. Cette position permet d'assurer que l'opercule (2b) ne soit plus en contact avec la partie périphérique (2a). Par conséquent, le conteneur offre une plus grande résistance contre les chocs du faisceau (5) tout en assurant la déconnexion électrique entre les électrodes d'une polarité et la borne de sortie de courant associée.

Selon un autre mode de réalisation, la pièce de connexion (3) est montée à l'envers dans le conteneur. Par montage à l'envers, on entend que, c'est la partie de connexion (3a) qui est reliée à l'opercule (2b) et que c'est la partie centrale (3b) qui est reliée électriquement au faisceau (5). Le diamètre de l'opercule doit donc avoir au moins le diamètre de la partie de connexion (3a). De plus, la partie centrale (3b) peut être reliée au faisceau par le biais d'une pièce intermédiaire.

L'accumulateur selon l'invention trouve des applications dans le domaine de l'aviation, du spatial, de la défense, du stationnaire et de l'automobile.

## Revendications

1. Conteneur (1) d'accumulateur étanche destiné à contenir un faisceau électrochimique, le conteneur comprenant :
- une paroi formant un fond (2) en matière conductrice électriquement, comprenant :
- une partie périphérique (2a),
- un opercule (2b),
- une partie fragilisée (2c) délimitant l'opercule (2b), joignant la partie périphérique (2a) à l'opercule (2b), adaptée à se rompre lors d'une surpression à l'intérieur du conteneur (1),
- une bague isolante électriquement (4), montée sur la partie périphérique destinée à servir d'appui au faisceau électrochimique,
**caractérisé en ce que**, le conteneur comprend
- une pièce de connexion souple (3) conductrice électriquement, reliée électriquement avec l'opercule (2b) et destinée à être raccordée électriquement au faisceau électrochimique,
dans lequel lors de la surpression entraînant la rupture de ladite partie fragilisée (2c), la pièce de connexion (3) se déforme et guide l'opercule (2b) vers une position après rupture sensiblement parallèle à la position avant rupture.

2. Conteneur selon la revendication 1 dans lequel la pièce de connexion souple comprend une partie de connexion (3a) destinée à être raccordée électriquement au faisceau, une partie centrale (3b) en contact avec à l'opercule.

3. Conteneur selon la revendication 2 dans lequel la pièce de connexion souple comprend un groupe de lamelles (3c) flexibles, spiralées, identiques, réparties régulièrement et reliant la partie centrale (3b) à la partie de connexion (3a).

4. Conteneur selon la revendication 3, dans lequel les lamelles forment sensiblement une croix en forme de svastika.

5. Conteneur selon l'une quelconque des revendications 2 à 4, dans lequel la partie de connexion (3a) et la partie centrale (3b) ont une forme circulaire.

6. Conteneur selon l'une quelconque des revendications 2 à 4, dans lequel la partie de connexion (3a) et la partie centrale (3b) se situent dans deux plans sensiblement parallèles et décalées.

7. Conteneur selon l'une quelconque des revendications 1 à 6, dans lequel la pièce de connexion souple (3) est montée sur la bague isolante (4), la bague isolant électriquement la pièce de connexion souple (3) de la partie périphérique (2a) après rupture.

8. Conteneur selon l'une quelconque des revendications 1 à 7, dans lequel la partie fragilisée (2c) est une partie de plus faible épaisseur que celle de l'opercule (2b) et de la partie périphérique (2a).

9. Conteneur selon l'une quelconque des revendications 1 à 8, dans lequel la pièce de connexion (3) est en aluminium.

10. Accumulateur étanche (4) comprenant
- le conteneur (1) selon l'une des revendications 1 à 9,
- un faisceau électrochimique dans le conteneur en appui sur la bague isolante, dans lequel la rupture est adaptée à interrompre la conduction électrique passant par l'opercule entre le faisceau et la borne de sortie de courant de correspondante.

## Patentansprüche

1. Behälter (1) für einen dichten Akkumulator, der dazu bestimmt ist, ein elektrochemisches Bündel zu enthalten, wobei der Behälter umfasst:
- eine einen Boden (2) bildende Wand aus elektrisch leitendem Material, welche umfasst:
- einen Umfangsteil (2a),
- ein Verschlussorgan (2b),
- einen das Verschlussorgan (2b) begrenzenden abgeschwächten Teil (2c), der den Umfangsteil (2a) mit dem Verschlussorgan (2b) verbindet und dafür eingerichtet ist, bei einem Überdruck im Inneren des Behälters (1) zu brechen,
- einen elektrisch isolierenden Ring (4), der auf dem Umfangsteil angebracht ist und dazu bestimmt ist, als Abstützung für das elektrochemische Bündel zu dienen,
**dadurch gekennzeichnet, dass** der Behälter umfasst:
- ein elektrisch leitendes flexibles Verbindungsstück (3), das mit dem Verschlussorgan (2b) elektrisch verbunden ist und dazu bestimmt ist, an das elektrochemische Bündel elektrisch angeschlossen zu werden,
wobei bei dem Überdruck, der den Bruch des abgeschwächten Teils (2c) zur Folge hat, das Verbindungsstück (3) sich verformt und das Verschlussorgan (2b) zu einer Position nach dem Bruch hin führt, die im Wesentlichen parallel zu der Position vor dem Bruch ist.

2. Behälter nach Anspruch 1, wobei das flexible Verbindungsstück einen Verbindungsteil (3a), der dazu bestimmt ist, an das Bündel elektrisch angeschlossen zu werden, und einen mit dem Verschlussorgan in Kontakt stehenden mittleren Teil (3b) umfasst.

3. Behälter nach Anspruch 2, wobei das flexible Verbindungsstück eine Gruppe von identischen spiralförmigen flexiblen Lamellen (3c) umfasst, die gleichmäßig verteilt sind und den mittleren Teil (3b) mit dem Verbindungsteil (3a) verbinden.

4. Behälter nach Anspruch 3, wobei die Lamellen im Wesentlichen ein Kreuz in Form eines Hakenkreuzes bilden.

5. Behälter nach einem der Ansprüche 2 bis 4, wobei der Verbindungsteil (3a) und der mittlere Teil (3b) eine kreisförmige Gestalt haben.

6. Behälter nach einem der Ansprüche 2 bis 4, wobei der Verbindungsteil (3a) und der mittlere Teil (3b) in zwei im Wesentlichen parallelen und zueinander versetzten Ebenen angeordnet sind.

7. Behälter nach einem der Ansprüche 1 bis 6, wobei das flexible Verbindungsstück (3) auf dem isolierenden Ring (4) angebracht ist, wobei der Ring das flexible Verbindungsstück (3) nach dem Bruch von dem Umfangsteil (2a) elektrisch isoliert.

8. Behälter nach einem der Ansprüche 1 bis 7, wobei der abgeschwächte Teil (2c) ein Teil ist, dessen Dicke geringer als diejenige des Verschlussorgans (2b) und des Umfangsteils (2a) ist.

9. Behälter nach einem der Ansprüche 1 bis 8, wobei das Verbindungsstück (3) aus Aluminium besteht.

10. Dichter Akkumulator (4), welcher umfasst:
- den Behälter (1) nach einem der Ansprüche 1 bis 9;
- ein elektrochemisches Bündel in dem Behälter, das sich auf den isolierenden Ring stützt, wobei der Bruch bewirkt, dass die über das Verschlussorgan verlaufende elektrisch leitende Verbindung zwischen dem Bündel und der entsprechenden Stromausgangsklemme unterbrochen wird.

## Claims

1. A container (1) for a sealed secondary cell adapted to contain an electrode plate group, the container comprising:
- a wall forming a base (2) in electrically conducting material, the base comprising:
- a peripheral portion (2a),
- a closure member portion (2b),
- a weakened portion (2c) delimiting the closure member portion (2b), joining the peripheral portion (2a) to the closure member portion (2b), and adapted to rupture in the presence of an excess pressure inside the container (1),
- an electrically insulating ring member (4) mounted on said peripheral portion adapted to act as a support for the electrode plate group,
**characterized in that** the container comprises
- an electrically conducting flexible connection part (3), electrically connected to the closure member portion (2b) and adapted to be electrically connected to the electrode plate group,
in which, in the presence of an excess pressure leading to rupturing of said weakened portion (2c), the connection part (3) becomes deformed and guides the closure member portion (2b) to a position after rupture which is substantially parallel to the position thereof prior to rupture.

2. The container according to claim 1 wherein the flexible connection part comprises a connecting portion (3a) adapted to be electrically connected to the electrode plate group, and a central portion (3b) in contact with the closure member portion.

3. The container according to claim 2 wherein the flexible connection part comprises a set of identical, spiraling, flexible thin strip portions (3c) uniformly distributed and connecting the central portion (3b) to the connecting portion (3a) thereof.

4. The container according to claim 3, in which the thin strip portions substantially form a swastika-shaped cross.

5. The container according to any one of claims 2 to 4, in which said connecting portion (3a) and said central portion (3b) are of a circular shape.

6. The container according to any one of claims 2 to 4, in which the connecting portion (3a) and the central portion (3b) are located in two substantially parallel and offset planes.

7. The container according to any one of claims 1 to 6 wherein the flexible connection part (3) is mounted on said insulating ring member (4), the ring member electrically insulating the flexible connection part (3) from said peripheral portion (2a) after rupture.

8. The container according to any one of claims 1 to 7, in which the weakened portion (2c) is a portion of a thickness less than that of the closure member portion (2b) and the peripheral portion (2a).

9. The container according to any one of claims 1 to 8, in which the connection part (3) is of aluminum.

10. A sealed secondary cell (4) comprising
- the container (1) according to any one of claims 1 to 9,
- an electrode plate group inside the container in abutment with the insulating ring member, in which rupturing is adapted to break off electrical conduction, passing via the closure member portion, between the electrode plate group and a corresponding power output terminal.
